# EUROPÄISCHE PATENTSCHRIFT

(11) **EP 3 359 923 B1**
(45) Veröffentlichungstag und Bekanntmachung des Hinweises auf die Patenterteilung: **08.12.2021**
(21) Anmeldenummer: 16747804.9
(22) Anmeldetag: 08.08.2016
(51) Int. Cl.: G01F 1/684, G01F 5/00, G01F 15/00

(54) **SENSORVORRICHTUNG ZUR ERFASSUNG MINDESTENS EINER STRÖMUNGSEIGENSCHAFT EINES FLUIDEN MEDIUMS**
SENSOR DEVICE FOR DETECTING AT LEAST ONE FLOW PROPERTY OF A FLUID MEDIUM
DISPOSITIF CAPTEUR DESTINÉ À LA DÉTECTION D'AU MOINS UNE PROPRIÉTÉ D'ÉCOULEMENT D'UN MILIEU FLUIDE

(30) Priorität: 08.10.2015 DE 102015219501
(43) Veröffentlichungstag der Anmeldung: 15.08.2018
(73) Patentinhaber: Robert Bosch GmbH, 70442 Stuttgart (DE)
(72) Erfinder: KAUFMANN, Andreas, 89567 Sontheim an der Brenz (DE); RITTMANN, Michael, 71254 Ditzingen (DE); MARKOV, Alexander, 70469 Stuttgart (DE); BODENBERGER, Bastian, 70597 Stuttgart (DE); BEYRICH, Hans, 71691 Freiberg / N (DE)
(86) Internationale Anmeldenummer: PCT/EP2016/068901
(87) Internationale Veröffentlichungsnummer: WO 2017/059985

(56) Entgegenhaltungen:
- EP-A1- 2 306 161
- WO-A1-2014/203555
- DE-A1-102010 043 083
- US-A1- 2002 069 699
- US-A1- 2002 069 699
- US-A1- 2012 237 402

## Beschreibung

### Stand der Technik

Aus dem Stand der Technik sind zahlreiche Verfahren und Vorrichtungen zur Bestimmung von Strömungseigenschaften fluider Medien, also von Flüssigkeiten und/oder Gasen, bekannt. Bei den Strömungseigenschaften kann es sich dabei grundsätzlich um beliebige physikalisch und/oder chemisch messbare Eigenschaften handeln, welche eine Strömung des fluiden Medium qualifizieren oder quantifizieren. Insbesondere kann es sich dabei um eine Strömungsgeschwindigkeit und/oder einen Massenstrom und/oder einen Volumenstrom handeln.

Die Erfindung wird im Folgenden insbesondere unter Bezugnahme auf so genannte Heißfilmluftmassenmesser beschrieben, wie sie beispielsweise aus Konrad Reif (Hrsg.), Sensoren im Kraftfahrzeug, 1. Aufl. 2010, Seiten 146-148, beschrieben sind. Derartige Heißfilmluftmassenmesser basieren in der Regel auf einem Sensorchip, insbesondere einem Silizium-Sensorchip, mit einer Messoberfläche, welche von dem strömenden fluiden Medium überströmbar ist. Der Sensorchip umfasst in der Regel mindestens ein Heizelement sowie mindestens zwei Temperaturfühler, welche beispielsweise auf der Messoberfläche des Sensorchips angeordnet sind. Aus einer Asymmetrie des von den Temperaturfühlern erfassten Temperaturprofils, welches durch die Strömung des fluiden Mediums beeinflusst wird, kann auf einen Massenstrom und/oder Volumenstrom des fluiden Mediums geschlossen werden. Heißfilmluftmassenmesser sind üblicherweise als Steckfühler ausgestaltet, welcher fest oder austauschbar in ein Strömungsrohr einbringbar ist.

Beispielsweise kann es sich bei diesem Strömungsrohr um einen Ansaugtrakt einer Brennkraftmaschine handeln.

Um aus den Sensorsignalen des Heißfilmluftmassenmessers präzise auf bestimmte Strömungseigenschaften des fluiden Mediums schließen zu können, ist es in vielen Fällen wünschenswert, weitere Informationen über das fluide Medium bereitstellen zu können. So wird beispielsweise in der DE 10 2010 043 083 A1, sowie in der EP 2 306 161 A1 eine Sensorvorrichtung zur Erfassung einer Strömungseigenschaft eines fluiden Mediums beschrieben, welche einen Luftmassenmesser mit einem Sensorelement zur Erfassung eines Luftmassenstroms aufweist. Darüber hinaus ist ein Feuchtesensor vorgesehen.

Trotz der durch diese Sensorvorrichtungen bewirkten Vorteile beinhalten diese noch Verbesserungspotenzial. So ist der Feuchtesensor auf einer separaten Leiterplatte durch einen Kunststoffrahmen mit integrierter Membran, die als Druckausgleichselement wirkt, vor Medien und mechanischer Einwirkung geschützt. Um dem Feuchtesensor den Zugang zum Messmedium zu gewährleisten, ist der darüber liegende Elektronikraumdeckel mit einer Einlassöffnung versehen. Der Feuchtesensor weist einen Feuchterahmen und eine für Feuchtigkeit semipermeable Membran auf gleicher Höhe mit dem Elektronikraumdeckel auf. Fluide Medien können durch den Spalt zwischen dem Elektronikraumdeckel und dem Feuchtesensor oder über eine Ablaufbohrung in dem Elektronikraumdeckel in den Elektronikraum gelangen und auch ausdringen. Insbesondere Wassereintrag kann die elektronischen Bauteile in dem Elektronikraum beschädigen, beispielsweise durch Vereisung.

### Offenbarung der Erfindung

Es wird daher eine Sensorvorrichtung zur Erfassung mindestens einer Strömungseigenschaft eines strömenden fluiden Mediums vorgeschlagen, welche die oben beschriebenen Nachteile bekannter Sensorvorrichtungen zumindest weitgehend vermeidet und die insbesondere ausgebildet ist, den Elektronikraum vor eindringenden Medien, insbesondere Wassereintrag, zu schützen und gleichzeitig eine Verbindung der Umgebung mit dem Feuchtesensor herzustellen.

Bezüglich der mindestens einen zu erfassenden Strömungseigenschaft, welche qualitativ und/oder quantitativ erfasst werden kann, kann beispielsweise auf die obige Beschreibung des Standes der Technik verwiesen werden. Insbesondere kann es sich bei dieser Strömungseigenschaft um eine Strömungsgeschwindigkeit und/oder einen Massenstrom und/oder einen Volumenstrom des fluiden Mediums handeln. Bei dem fluiden Medium kann es sich insbesondere um ein Gas, vorzugsweise um Luft, handeln. Die Sensorvorrichtung ist insbesondere einsetzbar in der Kraftfahrzeugtechnik, beispielsweise im Ansaugtrakt einer Verbrennungsmaschine. Auch andere Einsatzgebiete sind jedoch grundsätzlich möglich.

Die erfindungsgemäße Sensorvorrichtung zur Erfassung mindestens einer Strömungseigenschaft eines fluiden Mediums umfasst mindestens ein Sensorgehäuse. Unter einem Sensorgehäuse ist dabei im Rahmen der vorliegenden Erfindung eine einteilige oder auch mehrteilige Vorrichtung zu verstehen, welche die Sensorvorrichtung nach außen zumindest weitgehend abschließt und zumindest weitgehend schützt gegenüber mechanischen Einwirkungen und vorzugsweise auch anderen Arten von Einwirkungen, beispielsweise chemischen Einwirkungen und/oder Feuchteeinwirkungen. Insbesondere kann das Sensorgehäuse mindestens einen Steckfühler umfassen oder als Steckfühler ausgestaltet sein, wobei der Steckfühler in das strömende fluide Medium einbringbar ist, wobei eine austauschbare oder auch permanente Einbringung denkbar ist. Der Steckfühler kann beispielsweise in ein Strömungsrohr des strömenden fluiden Mediums hineinragen, wobei das Strömungsrohr selbst Bestandteil der Sensorvorrichtung sein kann oder auch als separates Bauteil vorgesehen sein kann, beispielsweise mit einer Öffnung, in welche der Steckfühler einbringbar ist. Der Steckfühler und das Sensorgehäuse können insbesondere zumindest teilweise aus einem Kunststoffmaterial hergestellt sein, beispielsweise mittels eines Spritzgussverfahrens.

In dem Sensorgehäuse ist mindestens ein Elektronikmodul mit mindestens einem Strömungssensor zur Erfassung der Strömungseigenschaft aufgenommen. Unter einer Aufnahme in dem Sensorgehäuse ist dabei zu verstehen, dass das Elektronikmodul zumindest teilweise, vorzugsweise vollständig, von dem Sensorgehäuse umschlossen sein soll. Das Elektronikmodul ist zumindest teilweise in mindestens einem Elektronikraum des Sensorgehäuses angeordnet. Unter einem Elektronikraum ist im Rahmen der vorliegenden Erfindung ein teilweise oder vollständig abgeschlossener Raum innerhalb des Sensorgehäuses zu verstehen, welcher in zumindest einer Richtung durch das Sensorgehäuse abgeschlossen ist. Vorzugsweise umfasst der Elektronikraum mindestens eine von einer Oberfläche des Sensorgehäuses aus zugängliche Vertiefung in dem Sensorgehäuse, beispielsweise eine quaderförmige Vertiefung. Der Elektronikraum kann, wie unten noch näher ausgeführt wird, beispielsweise für eine Bestückung zugänglich sein, beispielsweise von der Oberfläche her, und ist durch mindestens einen Elektronikraumdeckel, permanent oder reversibel verschließbar.

Unter einem Strömungssensor ist dabei grundsätzlich ein beliebiges Sensorelement zu verstehen, welches zur Erfassung der mindestens einen Strömungseigenschaft ausgestaltet ist. Insbesondere kann es sich bei dem Strömungssensor um mindestens einen Heißfilmluftmassenmesserchip handeln, beispielsweise der oben beschriebenen Art. Insbesondere kann dieser Heißfilmluftmassenmesserchip mindestens einen Siliziumchip umfassen, mit einer Messoberfläche, welche von dem strömenden fluiden Medium überströmbar ist. Auf dieser Sensoroberfläche können sich beispielsweise mindestens ein Heizelement und mindestens zwei Temperaturfühler befinden, wobei wie oben beschrieben, aus einer Asymmetrie des mittels der Temperaturfühler gemessenen Temperaturprofils auf die mindestens eine Strömungseigenschaft schließbar sein kann. Der mindestens eine Strömungssensor kann beispielsweise auf einem Sensorträger des Elektronikmoduls angeordnet sein, welcher in das strömende fluide Medium hineinragt. Das Elektronikmodul kann insbesondere einteilig ausgestaltet sein und kann insbesondere eine Ansteuer- und/oder Auswerteschaltung tragen, welche eingerichtet ist, um den Strömungssensor anzusteuern und/oder Signale des Strömungssensors aufzunehmen. Dementsprechend kann das Elektronikmodul beispielsweise mindestens einen Schaltungsträger aufweisen. Weiterhin kann das Elektronikmodul insbesondere den mindestens einen Sensorträger aufweisen, welcher mit dem Schaltungsträger vorzugsweise mechanisch verbunden ist. Beispielsweise kann der Schaltungsträger in dem Elektronikraum des Sensorgehäuses angeordnet sein, und der Sensorträger kann aus diesem Elektronikraum raus in das fluide Medium hineinragen. Besonders bevorzugt ist es, wenn das Sensorgehäuse mindestens einen von dem fluiden Medium durchströmbaren Kanal aufweist, wobei der Sensorträger des Elektronikmoduls, welcher den Strömungssensor trägt, aus dem Elektronikraum in den mindestens einen von dem fluiden Medium durchströmbaren Kanal in dem Sensorgehäuse ragt. Dieser mindestens eine Kanal kann insbesondere einteilig ausgestaltet sein, kann jedoch auch mindestens einen Hauptkanal und mindestens einen von diesem Hauptkanal abzweigenden Bypasskanal aufweisen, wobei der Sensorträger vorzugsweise in den Bypasskanal hineinragt, wie dies grundsätzlich aus dem Stand der Technik bekannt ist. Der Schaltungsträger des Elektronikmoduls kann insbesondere eine Leiterplatte umfassen, welche in Alleinstellung verwendet wird oder welche beispielsweise auch auf einem mechanischen Träger montiert ist, beispielsweise einem Bodenblech in Form eines Stanz-Biege-Teils, das aus einem metallischen Werkstoff hergestellt sein kann. Der Sensorträger kann mit dem Schaltungsträger unmittelbar verbunden sein oder auch mit dem Trägerteil, beispielsweise mit dem Bodenblech, beispielsweise indem der Sensorträger an das Bodenblech angespritzt ist. Auch andere Ausgestaltungen sind grundsätzlich möglich. So ist beispielsweise denkbar, das Elektronikmodul aus dem Leiterplattenmaterial herzustellen, wobei sowohl der Schaltungsträger als auch der Sensorträger aus dem Leiterplattenmaterial hergestellt sind, vorzugsweise aus einem Stück des Leiterplattenmaterials. Wiederum alternativ oder zusätzlich ist es auch möglich, aus dem Stand der Technik bekannte spritzgegossene Leiterplatten als Elektronikmodul zu verwenden, beispielsweise spritzgegossene Leiterplatten in einer oder mehreren so genannten MID-Techniken (MID = molded interconnect device). Verschiedene Ausgestaltungen sind daher denkbar.

Die Sensorvorrichtung weist weiterhin mindestens einen Feuchtesensor auf. Der Feuchtesensor ist innerhalb des Sensorgehäuses aufgenommen. Unter einer Anordnung innerhalb des Sensorgehäuses ist wiederum eine Anordnung zu verstehen, bei welcher der Feuchtesensor zumindest teilweise von dem Sensorgehäuse umschlossen ist, vorzugsweise vollständig. Unter einem Feuchtesensor ist grundsätzlich ein beliebiges Sensorelement zu verstehen, welches eingerichtet ist, um eine Feuchtigkeit des fluiden Mediums zu erfassen. Beispielsweise kommen hierbei resistive und/oder kapazitive Sensorelemente in Betracht, wie sie aus dem Stand der Technik bekannt sind. Beispiele derartiger Feuchtesensoren sind aus Konrad Reif (Hrsg.), 1. Aufl. 2010, Seiten 98-101 beschrieben. Auch andere Arten von Feuchtesensoren kommen jedoch grundsätzlich alternativ oder zusätzlich für den Einsatz im Rahmen der vorliegenden Erfindung in Betracht.

Das Sensorgehäuse weist mindestens eine Einlassöffnung zur Beaufschlagung des Feuchtesensors mit einer Feuchtigkeit des fluiden Mediums auf. Dabei ist der Elektronikraum gegenüber der Einlassöffnung abgedichtet. Dadurch kann das fluide Medium zu dem Feuchtesensor, nicht jedoch in den Elektronikraum gelangen. Entsprechend wird eine erhöhte Sicherheit gegen eindringende fluide Medien, insbesondere erhöhter Wassereintrag, der zu Vereisungsgefahr führen kann, gewährleistet.

Das Sensorgehäuse weist mindestens einen Elektronikraumdeckel auf, wobei der Elektronikraumdeckel zum Verschließen des Elektronikraums ausgebildet ist, wobei die Öffnung in dem Elektronikraumdeckel ausgebildet ist. Der Feuchtesensor kann mindestens eine Messkammer aufweisen, wobei die Messkammer durch mindestens eine für Feuchtigkeit zumindest teilweise permeable Membran und einen Rahmen begrenzt ist. In dem Elektronikraum ist vorgesehen, wobei das Gel das Elektronikmodul zumindest teilweise bedeckt. Bevorzugt ist das Gel ausgehärtet, so dass dieses nicht mehr fließfähig ist und das Elektronikmodul schützt. Der Elektronikraumdeckel weist einen in Richtung zu dem Elektronikraum vorstehenden Vorsprung auf, wobei der Vorsprung die Öffnung begrenzt, wobei der Vorsprung in das Gel hineinragt. Dadurch wird der Elektronikraum zusätzlich abgedichtet. Nicht erfindungsgemäß kann zwischen der Öffnung und dem Feuchtesensor ein Dichtelement angeordnet sein. Bevorzugt ist das Dichtelement zwischen dem Elektronikraumdeckel und dem Raum derart angeordnet, dass das Dichtelement die Öffnung umgibt. Das Elektronikmodul weist einen Feuchtesensor auf. Das Elektronikmodul kann wie oben erwähnt einen Schaltungsträger aufweisen, wobei der Feuchtesensor auf dem Schaltungsträger angeordnet ist. Das Elektronikmodul kann wie oben erwähnt einen Sensorträger umfassen, wobei der Sensorträger den Strömungssensor trägt und aus dem Elektronikraum in mindestens einen von dem fluiden Medium durchströmbaren Kanal im Sensorgehäuse ragt, wobei der Strömungssensor und der Feuchtesensor auf derselben Seite des Elektronikmoduls angeordnet sind.

Die Einlassöffnung kann grundsätzlich einen beliebigen Querschnitt aufweisen, beispielsweise einen rechteckigen und/oder runden und/oder polygonalen Querschnitt. Auch andere Ausgestaltungen sind möglich.

Die Sensorvorrichtung kann darüber hinaus auch ein oder mehrere weitere Sensorelemente umfassen, zur Erfassung mindestens einer weiteren physikalischen und/oder chemischen Eigenschaft des fluiden Mediums. Insbesondere kann die Sensorvorrichtung weiterhin mindestens einen Temperaturfühler aufweisen, insbesondere mindestens einen auf einer Außenseite des Sensorgehäuses angeordneten Temperaturfühler. Beispielsweise kann ein Temperaturfühler derart auf einer Außenseite des Sensorgehäuses angeordnet sein, dass dieser auf einer dem Feuchtensensor gegenüberliegenden Seite angeordnet ist. Auch andere Ausgestaltungen sind jedoch grundsätzlich möglich. Insbesondere kann der Temperaturfühler in mindestens einer Vertiefung auf einer Seitenwand des Sensorgehäuses angeordnet sein. Der Temperaturfühler kann insbesondere mindestens einen temperaturabhängigen Widerstand umfassen. Alternativ oder zusätzlich sind auch andere Arten von Temperaturfühlern einsetzbar. Der Temperaturfühler kann insbesondere frei von dem strömenden fluiden Medium überströmbar sein, also nicht von dem Sensorgehäuse des Sensorelements umschlossen sein. Der Temperaturfühler kann insbesondere durch einen Kraftschluss und/oder Formschluss mit dem Sensorgehäuse verbunden sein, beispielsweise indem Zuleitungen des Temperaturfühlers mit einer Außenwand des Sensorgehäuses verstemmt oder auf andere Weise verbunden sind. Zuleitungen des Temperaturfühlers können insbesondere ins Innere des Sensorgehäuses hineingeführt sein und dort beispielsweise mit dem Elektronikmodul verbunden sein und/oder mit einem Steckverbinder der Sensorvorrichtung verbunden sein. Verschiedene andere Ausgestaltungen sind grundsätzlich denkbar.

Die Sensorvorrichtung kann weiterhin beispielsweise einen Drucksensor aufweisen. Unter einem Drucksensor ist dabei grundsätzlich ein beliebiges Sensorelement zu verstehen, welches eingerichtet ist, um einen Druck des fluiden Mediums zu erfassen. Insbesondere kann es sich hierbei um Drucksensoren handeln, wie sie beispielsweise aus Konrad Reif (Hrsg.), Sensoren im Kraftfahrzeug, 1. Aufl. 2010, Seiten 80-82 und 134-136 beschrieben sind. Auch andere Arten von Drucksensoren sind jedoch alternativ oder zusätzlich einsetzbar, beispielsweise Drucksensoren, welche unmittelbar auf der Verwendung eines oder mehrerer Dehnungsmessstreifen oder ähnlicher Drucksensorelemente basieren.

### Kurze Beschreibung der Zeichnungen

Weitere optionale Einzelheiten und Merkmale der Erfindung ergeben sich aus der nachfolgenden Beschreibung bevorzugter Ausführungsbeispiele, welche in den Figuren schematisch dargestellt sind.

Es zeigen:
- Figur 1: eine Explosionsdarstellung einer erfindungsgemäßen Sensorvorrichtung zur Erfassung mindestens einer Strömungseigenschaft eines fluiden Mediums,
- Figur 2: eine Querschnittsansicht einer Sensorvorrichtung gemäß einer ersten Ausführungsform der Erfindung,
- Figur 3: eine Querschnittsansicht einer Sensorvorrichtung gemäß einer zweiten Ausführungsform,
- Figur 4: eine Querschnittsansicht einer Sensorvorrichtung gemäß einer dritten Ausführungsform,
- Figur 5: eine Querschnittsansicht einer Sensorvorrichtung gemäß einer vierten Ausführungsform und
- Figur 6: eine Querschnittsansicht einer Sensorvorrichtung gemäß einer fünften Ausführungsform.

### Ausführungsformen der Erfindung

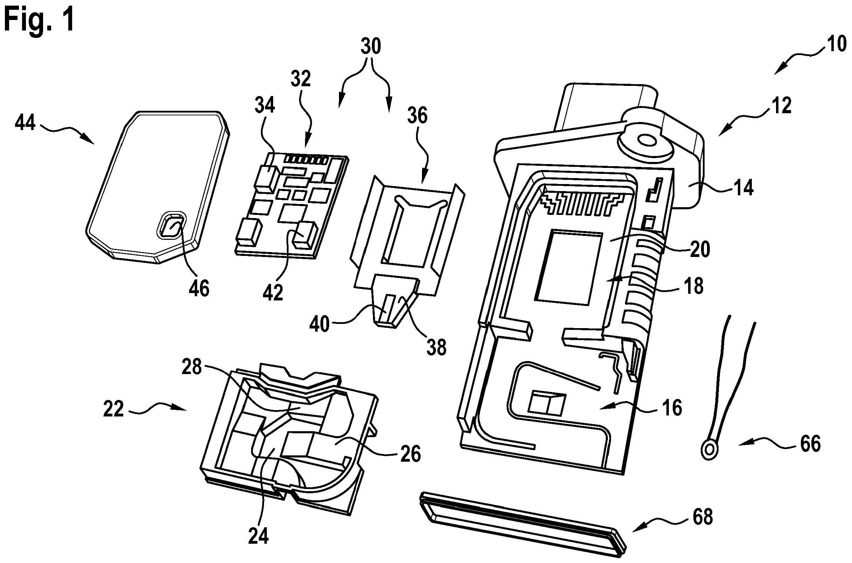

Figur 1 zeigt eine Explosionsansicht einer erfindungsgemäßen Sensorvorrichtung 10 zur Erfassung mindestens einer Strömungseigenschaft eines fluiden Mediums. Die Sensorvorrichtung 10 ist in diesem Ausführungsbeispiel als Heißfilmluftmassenmesser ausgestaltet und umfasst einen Steckfühler 12. Der Steckfühler 12 ist in eine Strömung des fluiden Mediums, beispielsweise eines Ansaugluftmassenstroms, einbringbar, beispielsweise reversibel einsteckbar in ein Ansaugrohr oder permanent installiert. Der Steckfühler 12 umfasst ein Sensorgehäuse 14. In dem Sensorgehäuse 14 ist ein Kanalbereich 16 und ein Elektronikbereich 18 mit einem in das Sensorgehäuse 14 eingelassenen Elektronikraum 20 aufgenommen. Der Kanalbereich 16 ist von einem Bypasskanaldeckel 22 verschließbar. In dem Bypasskanaldeckel 22 ist ein von dem fluiden Medium durchströmbarer Kanal 24 ausgebildet. Der Kanal 24 weist einen Hauptkanal 26 und einen davon abzweigenden Bypasskanal 28 auf.

In dem Elektronikraum 20 ist ein Elektronikmodul 30 aufgenommen. Das Elektronikmodul 30 weist einen Schaltungsträger 32 mit einer Ansteuer- und/oder Auswerteschaltung 34 auf, der beispielsweise auf einem Bodenblech 36 aufgenommen sein kann. Das Elektronikmodul 30 weist weiterhin einen Sensorträger 38 in Form eines an das Bodenblech 36 angespritzten Flügel auf. Der Sensorträger 38 ragt in den Bypasskanal 28 hinein. In den Sensorträger 38 ist ein Strömungssensor 40 in Form eines Heißfilmluftmassenmesserchips eingelassen.

Die Sensorvorrichtung 10 weist weiterhin einen Feuchtesensor 42 auf. Der Feuchtesensor 42 ist innerhalb des Sensorgehäuses 14 aufgenommen. So ist der Feuchtesensor 42 auf dem Schaltungsträger 32 des Elektronikmoduls 30 angeordnet. Der Sensorträger 38, das Bodenblech 36 und der Schaltungsträger 32 bilden das Elektronikmodul 30, welches zusätzlich die Ansteuer- und/oder Auswerteschaltung 34 umfassen kann. Zusätzlich zu dem Sensorträger 38 wird noch die Elektronik des Schaltungsträgers 32 und der Ansteuer- und/oder Auswerteschaltung 34 auf das Bodenblech 36 aufgeklebt. Der Strömungssensor 40, der Feuchtesensor 42 und die Ansteuer- und/oder Auswerteschaltung 34 werden in der Regel durch Bondverbindung miteinander verbunden. Das so entstandene Elektronikmodul 30 wird beispielsweise in den Elektronikraum 20 eingeklebt.

Die Sensorvorrichtung 10 weist weiterhin einen Elektronikraumdeckel 44 auf. Der Elektronikraumdeckel 44 ist zum Verschließen des Elektronikraums 20 ausgebildet. Das Verschließen kann dabei permanent oder reversibel erfolgen. Die Sensorvorrichtung 10 weist weiterhin mindestens eine Einlassöffnung 46 zur Beaufschlagung des Feuchtesensors 42 mit einer Feuchtigkeit des fluiden Mediums auf. Die Einlassöffnung 46 ist in dem Elektronikraumdeckel 44 ausgebildet. Wie in Figur 1 gezeigt, sind der Strömungssensor 40 und der Feuchtesensor 42 auf derselben Seite des Elektronikmoduls 30 bzw. des Schaltungsträgers 32 angeordnet. Mit anderen Worten sind der Strömungssensor 40 und der Feuchtesensor 42 gemeinsam auf ein und derselben Seite des Elektronikmoduls 30 bzw. des Schaltungsträgers 32 angeordnet.

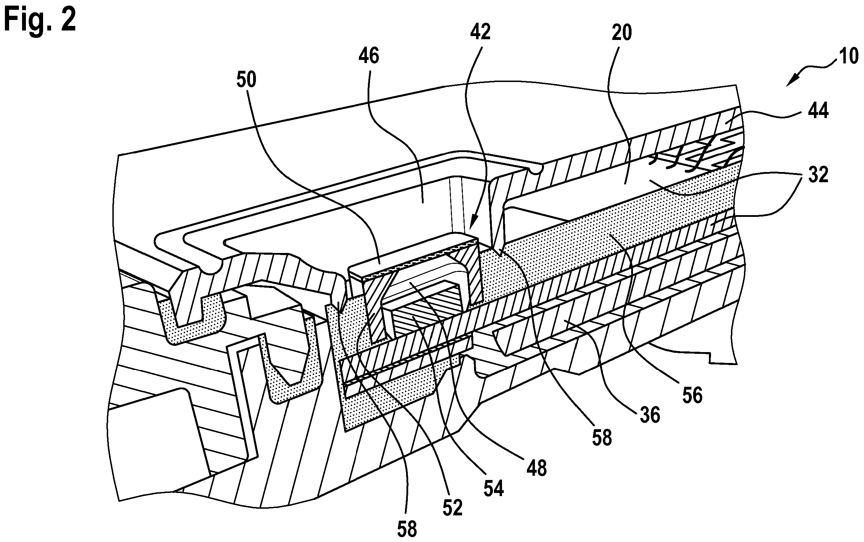

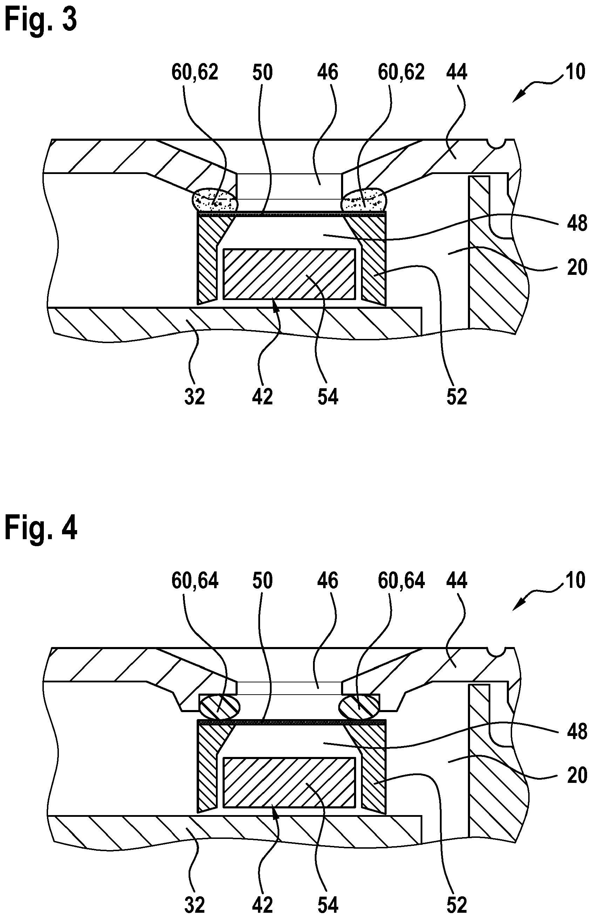

Figur 2 zeigt eine Querschnittsansicht der Sensorvorrichtung 10 gemäß einer ersten möglichen Ausführungsform. Wie in Figur 2 gezeigt, weist der Feuchtesensor 42 mindestens eine Messkammer 48 auf. Die Messkammer 48 ist durch mindestens eine für Feuchtigkeit zumindest teilweise permeable Membran 50 und einen Rahmen 52 begrenzt. Der Feuchtesensor 42 kann als Feuchtemodul 54 ausgestaltet sein oder in einem Feuchtemodul 54 enthalten sein. In dem Elektronikraum 20 ist ein Gel 56 vorgesehen. Das Gel 56 bedeckt das Elektronikmodul 30 und insbesondere den Schaltungsträger 32 zumindest teilweise. Das Gel 56 ist dabei ausgehärtet, beispielsweise mittels einer thermischen Behandlung oder mittels UV-Lichts, und somit nicht mehr fließfähig. Der Elektronikraumdeckel 44 weist einen in Richtung zu dem Elektronikraum 20 vorstehenden Vorsprung 58 auf. Der Vorsprung 58 ist beispielsweise als Dichtschwert ausgebildet. Der Vorsprung 58 begrenzt die Einlassöffnung 46. Der Vorsprung 58 ragt dabei in das Gel 56 hinein. Mit anderen Worten dringt der Vorsprung 58 in das Gel 56 ein. Das Gel 56 schützt dabei die Elektronik der Sensorvorrichtung 10. Für den mechanischen Schutz ist der Elektronikraumdeckel 44 vorgesehen. Der Vorsprung 58, der in das Gel 56 eindringt, dichtet die direkte Messumgebung des Feuchtesensors 42 zum Elektronikraum 20 hin ab. Dadurch wird der Medienschutz der verbauten Elektronikkomponenten erhöht und durch die klare Abgrenzung der Feuchtemessumgebung die Ansprechzeit des Feuchtesensors 42 erhöht. Figur 3 zeigt eine Querschnittsansicht einer Sensorvorrichtung 10 gemäß einer zweiten möglichen, nicht erfindungsgemäßen Ausführungsform. Nachstehend werden lediglich die Unterschiede zu der vorhergehenden Ausführungsform beschrieben, und gleiche Bauteile sind mit gleichen Bezugszeichen versehen. Bei der Sensorvorrichtung der zweiten Ausführungsform ist zwischen der Einlassöffnung 46 und dem Feuchtesensor 42 ein Dichtelement 60 angeordnet. Bei der Sensorvorrichtung 10 der zweiten Ausführungsform ist das Dichtelement 60 eine Klebstoffraupe 62. Das Dichtelement 60 bzw. die Klebstoffraupe 62 ist genauer zwischen dem Elektronikraumdeckel 44 und dem Rahmen 52 des Feuchtesensors 42 derart angeordnet, dass das Dichtelement 60 bzw. die Klebstoffraupe 62 die Einlassöffnung 46 umgibt.

Figur 4 zeigt eine Querschnittsansicht einer Sensorvorrichtung 10 gemäß einer dritten möglichen, nicht erfindungsgemäßen Ausführungsform. Nachstehend werden lediglich die Unterschiede zu den vorhergehenden Ausführungsformen beschrieben, und gleiche Bauteile sind mit gleichen Bezugszeichen versehen. Die Sensorvorrichtung 10 der dritten Ausführungsform ist eine Abwandlung der Sensorvorrichtung 10 der zweiten Ausführungsform. Bei der Sensorvorrichtung 10 der dritten Ausführungsform ist das Dichtelement 60 als medienresistente Dichtung 64 ausgebildet und zwischen dem Elektronikraumdeckel 44 und dem Rahmen 52 des Feuchtesensors 42 derart angeordnet, dass die Dichtung 64 die Einlassöffnung 46 umgibt. Dabei kann die Dichtung 64 durch den Elektronikraumdeckel 44 gegen den Rahmen 52 gedrückt werden, um so eine ausreichende Dichtwirkung zu erzielen.

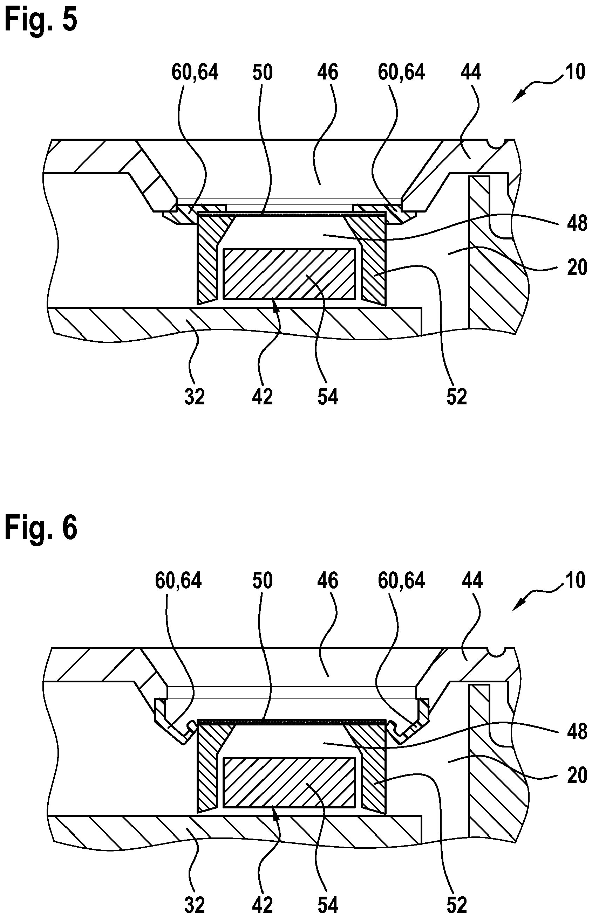

Figur 5 zeigt eine Querschnittsansicht einer Sensorvorrichtung 10 gemäß einer vierten, nicht erfindungsgemäßen Ausführungsform. Nachstehend werden lediglich die Unterschiede zu der vorhergehenden Ausführungsform beschrieben, und gleiche Bauteile sind mit gleichen Bezugszeichen versehen. Bei der Sensorvorrichtung 10 der vierten Ausführungsform ist die Dichtung 64 axial orientiert. Mit anderen Worten ist die Dichtung 64 zumindest teilweise oberhalb des Rahmens 52 angeordnet und weist dem Elektronikraumdeckel 44 zu. Daher drückt der Elektronikraumdeckel 44 die Dichtung 64 in Richtung zu dem Rahmen 52.

Figur 6 zeigt eine Sensorvorrichtung gemäß einer fünften, nicht erfindungsgemäßen Ausführungsform der Erfindung. Nachstehend werden lediglich die Unterschiede zu der vorhergehenden Ausführungsform beschrieben, und gleiche Bauteile sind mit gleichen Bezugszeichen versehen. Bei der Sensorvorrichtung 10 der fünften Ausführungsform ist die Dichtung 64 radial orientiert. Mit anderen Worten ist die Dichtung 64 seitlich an dem Rahmen 52 angeordnet und berührt den Elektronikraumdeckel 44. Dadurch wird eine seitliche Abdichtungswirkung erzielt.

Grundsätzlich gilt für alle beschriebenen Ausführungsformen, dass die Sensorvorrichtung 10 zum Erfassen weiterer Strömungseigenschaften des fluiden Mediums ausgebildet ist. Wie in Figur 1 gezeigt, kann die Sensorvorrichtung 10 beispielsweise weiterhin mindestens einen Temperaturfühler 66 aufweisen, der zum Erfassen einer Temperatur des fluiden Mediums ausgebildet ist. Der Temperaturfühler 66 kann auf einer Außenseite des Sensorgehäuses 14 angeordnet sein. Beispielsweise kann der Temperaturfühler 66 derart auf einer dem Feuchtensensor 42 gegenüberliegenden Außenseite des Sensorgehäuses 14 angeordnet sein. Insbesondere kann der Temperaturfühler 66 in mindestens einer Vertiefung auf einer Seitenwand bzw. der Rückseite des Sensorgehäuses 14 angeordnet sein. Wie in Figur 1 weiterhin gezeigt, kann die Sensorvorrichtung weiterhin eine Gehäusedichtung 68 aufweisen, die zum Abdichten des Sensorgehäuses 14 gegen ein Strömungsrohr ausgebildet ist.

## Patentansprüche

1. Sensorvorrichtung (10) zur Erfassung mindestens einer Strömungseigenschaft eines fluiden Mediums, umfassend mindestens ein Sensorgehäuse (14), wobei in dem Sensorgehäuse (14) mindestens ein Elektronikmodul (30) mit mindestens einem Strömungssensor (40) zur Erfassung der Strömungseigenschaft aufgenommen ist, wobei das Elektronikmodul (30) zumindest teilweise in einem Elektronikraum (20) aufgenommen ist, wobei weiterhin innerhalb des Sensorgehäuses (14) mindestens ein Feuchtesensor (42) aufgenommen ist, wobei das Sensorgehäuse (14) mindestens eine Einlassöffnung (46) zur Beaufschlagung des Feuchtesensors (42) mit einer Feuchtigkeit des fluiden Mediums aufweist und wobei der Elektronikraum (20) gegenüber der Einlassöffnung (46) abgedichtet ist und das Elektronikmodul (30) den Feuchtesensor (42) aufweist, **dadurch gekennzeichnet, dass** in dem Elektronikraum (20) ein Gel (56) vorgesehen ist, wobei das Gel (56) das Elektronikmodul (30) zumindest teilweise bedeckt und ein Elektronikraumdeckel (44) einen in Richtung zu dem Elektronikraum (20) vorstehenden Vorsprung (58) aufweist, wobei der Vorsprung (58) die Einlassöffnung (46) begrenzt, wobei der Vorsprung (58) in das Gel (56) hineinragt.

2. Sensorvorrichtung (10) nach dem vorhergehenden Anspruch, wobei der Elektronikraumdeckel (44) zum Verschließen des Elektronikraums (20) ausgebildet ist, wobei die Einlassöffnung (46) in dem Elektronikraumdeckel (44) ausgebildet ist.

3. Sensorvorrichtung (10) nach dem vorhergehenden Anspruch, wobei der Feuchtesensor (42) mindestens eine Messkammer (48) aufweist, wobei die Messkammer (48) durch mindestens eine für Feuchtigkeit zumindest teilweise permeable Membran (50) und einen Rahmen (52) begrenzt ist.

4. Sensorvorrichtung (10) nach einem der vorhergehenden Ansprüche, wobei das Elektronikmodul (30) einen Schaltungsträger (32) aufweist, wobei der Feuchtesensor (42) auf dem Schaltungsträger (32) angeordnet ist.

5. Sensorvorrichtung (10) nach einem der vorhergehenden Ansprüche, wobei das Elektronikmodul (30) einen Sensorträger (38) umfasst, wobei der Sensorträger (38) den Strömungssensor (40) trägt und aus dem Elektronikraum (20) in mindestens einen von dem fluiden Medium durchströmbaren Kanal (24) in dem Sensorgehäuse (14) ragt, wobei der Strömungssensor (40) und der Feuchtesensor (42) auf derselben Seite des Elektronikmoduls (30) angeordnet sind.

## Claims

1. Sensor apparatus (10) for detecting at least one flow property of a fluid medium, comprising at least one sensor housing (14), wherein at least one electronics module (30) with at least one flow sensor (40) for detecting the flow property is accommodated in the sensor housing (14), wherein the electronics module (30) is at least partially accommodated in an electronics compartment (20), wherein at least one moisture sensor (42) is furthermore accommodated within the sensor housing (14), wherein the sensor housing (14) has at least one inlet opening (46) for applying moisture from the fluid medium to the moisture sensor (42), and wherein the electronics compartment (20) is sealed off from the inlet opening (46) and the electronics module (30) has the moisture sensor (42), **characterized in that** a gel (56) is provided in the electronics compartment (20), wherein the gel (56) at least partially covers the electronics module (30) and an electronics compartment cover (44) has a projection (58) which projects in the direction of the electronics compartment (20), wherein the projection (58) delimits the inlet opening (46), wherein the projection (58) extends into the gel (56).

2. Sensor apparatus (10) according to the preceding claim, wherein the electronics compartment cover (44) is designed to close the electronics compartment (20), wherein the inlet opening (46) is formed in the electronics compartment cover (44).

3. Sensor apparatus (10) according to the preceding claim, wherein the moisture sensor (42) has at least one measurement chamber (48), wherein the measurement chamber (48) is delimited by at least one membrane (50), which is at least partially permeable to moisture, and a frame (52) .

4. Sensor apparatus (10) according to one of the preceding claims, wherein the electronics module (30) has a circuit carrier (32), wherein the moisture sensor (42) is arranged on the circuit carrier (32).

5. Sensor apparatus (10) according to one of the preceding claims, wherein the electronics module (30) comprises a sensor carrier (38), wherein the sensor carrier (38) carries the flow sensor (40) and projects out of the electronics compartment (20) into at least one channel (24), through which the fluid medium can flow, in the sensor housing (14), wherein the flow sensor (40) and the moisture sensor (42) are arranged on the same side of the electronics module (30).

## Revendications

1. Dispositif capteur (10) destiné à la détection d'au moins une propriété d'écoulement d'un milieu fluide, comprenant au moins un boîtier de capteur (14), au moins un module électronique (30) doté d'au moins un capteur d'écoulement (40) destiné à la détection de la propriété d'écoulement étant reçu dans le boîtier de capteur (14), le module électronique (30) étant reçu au moins partiellement dans un compartiment électronique (20), au moins un capteur d'humidité (42) étant en outre reçu à l'intérieur du boîtier de capteur (14), le boîtier de capteur (14) présentant au moins une ouverture d'entrée (46) pour soumettre le capteur d'humidité (42) à une humidité du milieu fluide, et le compartiment électronique (20) étant rendu étanche par rapport à l'ouverture d'entrée (46), et le module électronique (30) présentant le capteur d'humidité (42),
**caractérisé en ce qu'**un gel (56) est prévu dans le compartiment électronique (20), le gel (56) recouvrant au moins partiellement le module électronique (30), et un couvercle de compartiment électronique (44) présente une saillie dépassant en direction du compartiment électronique (20), la saillie (58) délimitant l'ouverture d'entrée (46), la saillie (58) pénétrant dans le gel (56).

2. Dispositif capteur (10) selon la revendication précédente, dans lequel le couvercle de compartiment électronique (44) est réalisé pour fermer le compartiment électronique (20), l'ouverture d'entrée (46) étant réalisée dans le couvercle de compartiment électronique (44).

3. Dispositif capteur (10) selon la revendication précédente, dans lequel le capteur d'humidité (42) présente au moins une chambre de mesure (48), la chambre de mesure (48) étant délimitée par au moins une membrane (50) au moins partiellement perméable à l'humidité et par un cadre (52).

4. Dispositif capteur (10) selon l'une quelconque des revendications précédentes, dans lequel le module électronique (30) présente un support de circuit (32), le capteur d'humidité (42) étant disposé sur le support de circuit (32).

5. Dispositif capteur (10) selon l'une quelconque des revendications précédentes, dans lequel le module électronique (30) comprend un support de capteur (38), le support de capteur (38) portant le capteur d'écoulement (40) et dépassant du compartiment électronique (20) dans au moins un canal (24) pouvant être traversé par le milieu fluide dans le boîtier de capteur (14), le capteur d'écoulement (40) et le capteur d'humidité (42) étant disposés du même côté du module électronique (30).
